# EUROPÄISCHE PATENTSCHRIFT

(11) **EP 1 420 985 B1**
(45) Veröffentlichungstag und Bekanntmachung des Hinweises auf die Patenterteilung: **02.02.2005**
(21) Anmeldenummer: 02745342.2
(22) Anmeldetag: 31.05.2002
(51) Int. Cl.: B60S 3/00

(54) **TROCKNUNGSVORRICHTUNG FÜR FAHRZEUGE**
DRYING DEVICE FOR VEHICLES
DISPOSITIF DE SECHAGE DE VEHICULES

(30) Priorität: 16.08.2001 DE 20113567 U
(43) Veröffentlichungstag der Anmeldung: 26.05.2004
(73) Patentinhaber: WashTec Holding GmbH, 86153 Augsburg (DE)
(72) Erfinder: KÖNIG, Norbert, 86167 Augsburg (DE)
(74) Vertreter: Gehrsitz, Stefan, Dr.
(86) Internationale Anmeldenummer: PCT/EP2002/006009
(87) Internationale Veröffentlichungsnummer: WO 2003/016113

(56) Entgegenhaltungen:
- EP-A- 1 029 759
- US-A- 4 979 316
- PATENT ABSTRACTS OF JAPAN vol. 017, no. 527 (M-1484), 22. September 1993 (1993-09-22) & JP 05 139258 A (DAIFUKU CO LTD), 8. Juni 1993 (1993-06-08)

## Beschreibung

Die Erfindung betrifft eine Trocknungsvorrichtung für Fahrzeuge gemäß dem Oberbegriff des Anspruchs 1.

Eine derartige Trocknungsvorrichtung ist aus der EP 1 029 759 Al bekannt. Dort ist ein Gebläse am unteren Ende eines Gestells um eine Horizontalachse verschwenkbar angelenkt. Oberhalb des Gebläses ist eine mit diesem fest verbundene Düse angeordnet, die eine schlitzförmige Luftaustrittsöffhung für die durch das Gebläse geförderte Luft aufweist. Durch einen zwischen dem Gestell und dem Gebläse angeordneten Stellzylinder ist die aus der Trocknungsdüse und dem Gebläse gebildete Einheit zwischen einer Ruhestellung mit vertikal angeordneter Luftaustrittsöffnung und einer Trocknungsstellung mit nach unten geneigter Luftaustrittsöffnung verschwenkbar. Dadurch soll die Luftaustrittsdüse an die üblicherweise schrägen Seitenflächen derart angepaßt werden, daß der Abstand der Luftaustrittsöffnung vom der Fahrzeugseite im oberen und unteren Bereich nahezu gleich ist. Bei dieser bekannten Trocknungsvorrichtung muß die Gebläseluft jedoch zunächst nach oben geführt und dann innerhalb der Düse wieder nach unten umgelenkt werden. Durch eine derartige Strömungsumlenkung wird jedoch der Wirkungsgrad der Trocknungsvorrichtung beschränkt.

Aufgabe der Erfindung ist es eine Vorrichtung der eingangs genannten Art zu schaffen, die eine Trocknung der Fahrzeuge mit verbessertem Wirkungsgrad ermöglicht.

Diese Aufgabe wird durch eine Vorrichtung mit den Merkmalen des Anspruchs 1 gelöst. Zweckmäßige Ausgestaltungen und vorteilhafte Weiterbildungen der Erfindung sind in den Unteransprüchen angegeben.

Ein wesentlicher Vorteil der erfindungsgemäßen Trocknungsvorrichtung besteht darin, daß der durch das Gebläse erzeugte Luftstrom ohne wesentliche Umlenkung schräg von oben auf die Seitenflächen gerichtet werden kann. Dadurch können die auf den Seiten eines Fahrzeugs befindlichen Wasserreste auf besonders effektive Weise nach unten weggeblasen werden. Außerdem kann durch die Verstellung der Trocknungsdüsen eine optimale Anpassung der Trocknungsvorrichtung an unterschiedliche Seitenflächenkonturen von Fahrzeugen erreicht werden.

In einer für die Trocknung der Seitenflächen eines Kraftfahrzeugs innerhalb einer Fahrzeugwaschanlage besonders zweckmäßigen Ausführung ist das Gestell als Portal ausgeführt, an dessen gegenüberliegenden Vertikalstützen jeweils ein Gebläse und eine mit diesem verbundene Trocknungsdüse zum Trocknen der Fahrzeugseitenflächen angeordnet sind. Das Portal kann als Fahrportal innerhalb einer Portalwaschanlage oder auch als feststehendes Portal innerhalb einer Autowaschstraße ausgeführt sein, bei der das Fahrzeug an den ortsfesten Vertikalstützen des Portals vorbeigeführt wird. Das Gebläse und die Trocknungsdüse können aber auch an beliebigen ortsfesten oder beweglichen Trägern innerhalb einer Waschanlage angeordnet sein.

Die Gebläse sind in vorteilhafter Weise im oberen Bereich der jeweiligen Vertikalstütze angeordnet. Dadurch kann verhindert werden, daß im unteren Bereich des Portals befindliche feuchte Luft angesaugt wird.

Das Gebläse enthält ein Gehäuse mit einem nach unten weisenden Luftführungskanal, der in eine entsprechende Öffnung der Trocknungsdüse eingreift. Auf diese Weise sind Gebläse und Trocknungsdüse derart miteinander gekoppelt, daß durch Verschwenken eines der beiden Teile gleichzeitig auch das andere mitgeschwenkt wird. Das Gebläse und die Trocknungsdüse können so durch einen gemeinsamen Antrieb verschwenkt werden.

In einer konstruktiv einfachen Ausführung kann das Verschwenken der Trocknungsdüse und des Gebläses durch einen hydraulischen, elektrischen oder pneumatischen Antrieb erfolgen, der zwischen der Vertikalstütze und der Trocknungsdüse angeordnet ist. Es können aber auch andere geeignete Stellantriebe verwendet werden.

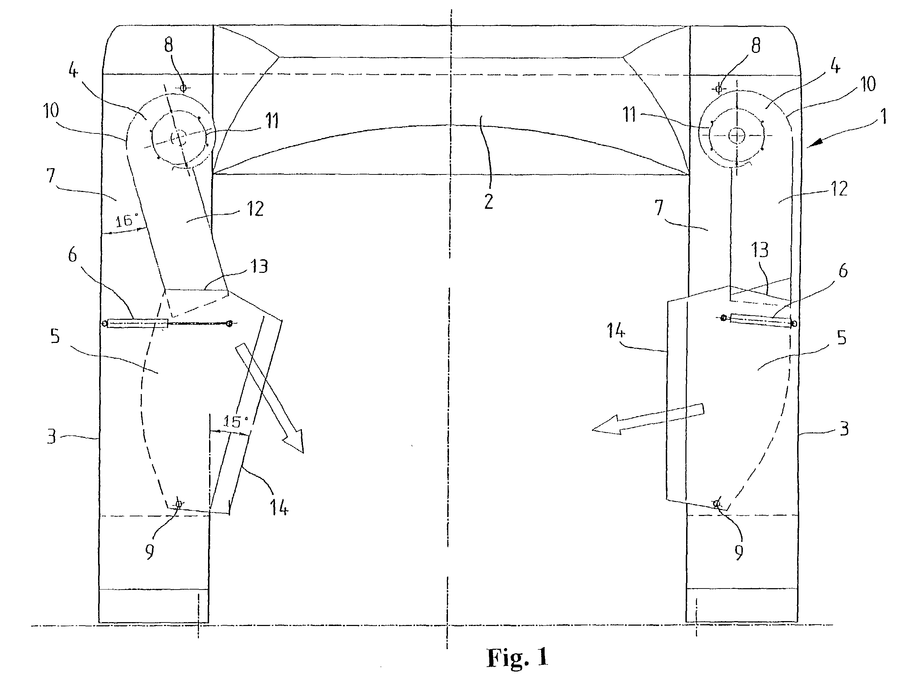

Weitere Besonderheiten und Vorteile der Erfindung ergeben sich aus der folgenden Beschreibung eines Ausführungsbeispiels anhand der Zeichnung, die eine erfindunsgemäße Trocknungsvorrichtung zum Trocknen der Seitenflächen eines Fahrzeugs in unterschiedlichen Stellungen zeigt.

Die in der Zeichnung dargestellte Trocknungsvorrichtung umfaßt ein Portal 1 mit einer Traverse 2 und zwei gegenüberliegenden Vertikalstützen 3, an denen jeweils ein Gebläse 4 und eine mit diesem verbundene Trocknungsdüse 5 durch einen als Verstellzylinder 6 ausgeführten Stellantrieb gegensinnig verschwenkbar angeordnet sind. Die beiden Gebläse 4 sind im oberen Bereich der zugehörigen Vertikalstütze 3 um jeweils eine zu der Stirnfläche 7 der Vertikalstütze 3 senkrechte erste Horizontalachse 8 verschwenkbar angelenkt. Die zu den Gebläsen 4 gehörenden Trocknungsdüsen 5 sind im unteren Bereich der jeweiligen Vertikalstütze 3 um jeweils eine zu deren Stirnfläche 7 senkrechte zweite Horizontalachse 9 verschwenkbar angeordnet.

Das Gebläse 4 enthält ein Gehäuse 10, in dem ein motorisch angetriebenes Gebläserad 11 untergebracht ist. Das Gehäuse 9 weist einen nach unten gerichteten Luftführungskanal 12 auf, der in eine entsprechende Öffnung 13 am oberen Ende der Trocknungsdüse 5 eingreift. Die an ihrem unteren Ende um die zweite Horizontalachse 9 verschwenkbar angelenkte Trocknungsdüse 5 hat eine seitlich angeordnete schlitzförmige Düsenaustrittsöffnung 14, durch die der vom Gebläse 4 geförderte Luftstrom auf die Seitenflächen eines Fahrzeugs gerichtet werden kann.

Am oberen Ende der Trocknungsdüse 5 greift das eine Ende des hydraulisch oder pneumatisch betätigten Verstellzylinders 6 an, dessen anderes Ende an der Vertikalstütze 3 angeordnet ist. Durch entsprechende Ansteuerung des Verstellzylinders 6 kann die Trocknungsdüse 5 zwischen einer in der rechten Zeichnungshälfte dargestellten Einklappstellung mit vertikal angeordneter Düsenaustrittsöffhung 14 und einer in der linken Zeichnungshälfte gezeigten Ausklappstellung mit schräg nach unten gerichteter Düsenaustrittsöffnung 14 verschwenkt werden. Durch die formschlüssige Steckverbindung zwischen dem Luftführungskanal 12 und der Trocknungsdüse 5 wird beim Verschwenken der Trocknungsdüse 5 gleichzeitig das Gebläse 4 in entgegengesetzter Richtung mitgeschwenkt.

Bei der in der linken Hälfte der Zeichnung gezeigten Ausklappstellung wird die vom Gebläse 4 geförderte Luft durch den Luftführungskanal 12 und durch die Trocknungsdüse 5 hindurch ohne wesentliche Umlenkung schräg von oben nach unten auf eine Seitenfläche eines zu trocknenden Fahrzeuges gerichtet, wie dies durch den Pfeil dargestellt ist. Auf der Fahrzeugseitenfläche befindliche Wassertropfen können so auf besonders effektive Weise von oben nach unten abgeblasen werden.

Die Erfindung ist nicht auf das in der Zeichnung dargestellte und in der Beschreibung ausführlich erläuterte Ausführungsbeispiel, sondern auf den Schutzbereich der folgenden Ansprüche, beschränkt. So können z.B. anstelle der zur Verstellung verwendeten Stellzylinder auch andere geeignete Stellantriebe eingesetzt werden.

## Patentansprüche

1. Trocknungsvorrichtung für Fahrzeuge mit mindestens einem an einem Gestell (1) um eine erste Horizontalachse (8) verschwenkbar angeordneten Gebläse (4) und einer mit diesem verbundenen Trocknungsdüse (5), **dadurch gekennzeichnet, daß** die Trocknungsdüse (5) um eine zweite Horizontalachse (9) verschwenkbar an dem Gestell (1) angeordnet ist und daß das Gebläse (4) und die Trocknungsdüse (5) durch einen Stellantrieb (6) gegensinnig verschwenkbar sind.

2. Vorrichtung nach Anspruch 1, **dadurch gekennzeichnet, daß** das Gestell (1) ein Portal mit gegenüberliegenden Vertikalstützen (3) ist, an denen jeweils ein Gebläse (4) und eine mit diesem verbundene Trocknungsdüse (5) angeordnet sind.

3. Vorrichtung nach Anspruch 2, **dadurch gekennzeichnet, daß** das Gebläse (4) im oberen Bereich der Vertikalstütze (3) und die Trocknungsdüse (5) im unteren Bereich der Vertikalstütze (3) verschwenkbar angelenkt sind.

4. Vorrichtung nach einem der Ansprüche 1 bis 3, **dadurch gekennzeichnet, daß** das Gebläse (4) und die Trocknungsdüse (5) durch einen gemeinsamen Stellantrieb (6) verschwenkbar sind.

5. Vorrichtung nach einem der Ansprüche 1 bis 4, **dadurch gekennzeichnet, daß** der Stellantrieb (6) ein hydraulischer, elektrischer oder pneumatischer Antrieb ist.

6. Vorrichtung nach einem der Ansprüche 1 bis 5, **dadurch gekennzeichnet, daß** die Trocknungsdüse (5) zwischen einer Einklappstellung mit vertikal angeordneter Düsenaustrittsöffnung (14) und einer Ausklappstellung mit schräg nach unten gerichteter Düsenaustrittsöffnung (14) verschwenkbar ist.

7. Vorrichtung nach einem der Ansprüche 1 bis 6, **dadurch gekennzeichnet, daß** das Gebläse (4) ein Gehäuse (10) mit einem nach unten weisenden Luftführungskanal (11) enthält, der in eine entsprechende Öffnung (13) am oberen Ende der Trocknungsdüse (5) eingreift.

## Claims

1. Drying device for vehicles with at least one blower (4) which is arranged pivotable about a first horizontal axis (8) on a frame (1), and with a drying nozzle (5) which is connected to said blower, **characterised in that** the drying nozzle (5) is arranged pivotable about a second horizontal axis (9) on the frame (1) and **in that** the blower (4) and the drying nozzle (5) are pivotable in opposite directions by a positioning drive (6).

2. Device according to claim 1, **characterised in that** the frame (1) is a portal with facing vertical supports (3) on each of which are arranged a blower (4) and a drying nozzle (5) connected to the latter.

3. Device according to claim 2, **characterised in that** the blower (4) is attached pivotably in the upper area of the vertical support (3) and **in that** the drying nozzle (5) is attached pivotably in the lower area of the vertical support (3).

4. Device according to one of claims 1 to 3, **characterised in that** the blower (4) and the drying nozzle (5) are pivotable by a common positioning drive (6) .

5. Device according to one of claims 1 to 4, **characterised in that** the positioning drive (6) is a hydraulic, electric or pneumatic drive.

6. Device according to one of claims 1 to 5, **characterised in that** the drying nozzle (5) is pivotable between a retracted position with the nozzle outlet opening (14) arranged vertically, and an extended position with the nozzle outlet opening (14) angled obliquely downwards.

7. Device according to one of claims 1 to 6, **characterised in that** the blower (4) comprises a housing (10) with an air duct (11) which points downwards and engages in a corresponding opening (13) at the upper end of the drying nozzle (5).

## Revendications

1. Dispositif de séchage de véhicules, avec au moins un ventilateur (4), disposé à pivotement sur un châssis (1), autour d'un premier axe horizontal (8) et une buse de séchage (5), reliée au ventilateur, **caractérisé en ce que** la buse de séchage (5) est disposée à pivotement sur le châssis (1), autour d'un deuxième axe horizontal (9) et que le ventilateur (4) et la buse de séchage (5) peuvent pivoter en sens inverse par le biais d'un mécanisme de commande (6).

2. Dispositif selon la revendication 1, **caractérisé en ce que** le châssis (1) est un portique avec des montants verticaux opposés (3), sur lesquels sont disposés, respectivement, un ventilateur (4) et une buse de séchage (5), qui y est reliée.

3. Dispositif selon la revendication 2, **caractérisé en ce que** le ventilateur (4), dans le secteur supérieur du montant vertical (3) et la buse de séchage (5), dans le secteur inférieur du montant vertical (3), sont articulés à pivotement.

4. Dispositif selon l'une des revendications 1 à 3, **caractérisé en ce que** le ventilateur (4) et la buse de séchage (5) peuvent pivoter par le biais d'un mécanisme de commande (6) commun.

5. Dispositif selon l'une des revendications 1 à **4, caractérisé en ce que** le mécanisme de commande (6) est une commande hydraulique, électrique ou pneumatique.

6. Dispositif selon l'une des revendications 1 à 5, **caractérisé en ce que** la buse de séchage (5) peut pivoter entre une position d'escamotage, avec ouverture de décharge de la buse (14), disposée verticalement et une position de déploiement, avec ouverture de décharge de la buse (14), dirigée en biais vers le bas.

7. Dispositif selon l'une des revendications 1 à 6, **caractérisé en ce que** le ventilateur (4) contient un boîtier (10), avec un canal de guidage de l'air (11), tourné vers le bas, qui vient en prise dans une ouverture correspondante (13), à l'extrémité supérieure de la buse de séchage (5).
